# EUROPÄISCHE PATENTSCHRIFT

(11) **EP 0 780 917 B1**
(45) Veröffentlichungstag und Bekanntmachung des Hinweises auf die Patenterteilung: **26.01.2000**
(21) Anmeldenummer: 95810806.0
(22) Anmeldetag: 19.12.1995
(51) Int. Cl.: H01M 8/04, H01M 8/06, H01M 8/24

(54) **Vorrichtung mit Brennstoffzellen**
Device comprising fuel cells
Dispositif comportant des piles à combustible

(43) Veröffentlichungstag der Anmeldung: 25.06.1997
(73) Patentinhaber: Sulzer Hexis AG, 8400 Winterthur (CH)
(72) Erfinder: Diethelm, Roland, CH-8494 Bauma (CH)
(74) Vertreter: Heubeck, Bernhard

(56) Entgegenhaltungen:
- EP-A- 0 377 151
- EP-A- 0 654 838
- EP-A- 0 668 622
- WO-A-94/18712
- DE-A- 4 217 892
- US-A- 3 146 131
- US-A- 3 718 506
- PATENT ABSTRACTS OF JAPAN vol. 012, no. 153 (E-607), 11.Mai 1988 & JP-A-62 268066 (MITSUBISHI HEAVY IND LTD), 20.November 1987,

## Beschreibung

Die Erfindung betrifft eine Vorrichtung mit Brennstoffzellen gemäss Oberbegriff von Anspruch 1 sowie ein Verfahren zum Anfahren des Betriebs der Vorrichtung.

In einer derartigen, aus der EP-A 0654 838 bekannten Vorrichtung ist ein Prereformer integriert. Mit dem Hilfsbrenner wird während einer Anfahrphase einerseits der Prereformer aufgeheizt und andererseits eingespeiste Luft in einem Kanalsystem der Hülle vorgewärmt. Mit der vorgewärmten Luft wird dem Zellenblock Wärme zugeführt. Diese Wärmezufuhr reicht nicht aus, die Brennstoffzellen auf eine minimale Betriebstemperatur von 850°C zu erhitzen. Daher ist es nötig, Brenngas und Luft in die Vorrichtung einzuspeisen und in dem Nachverbrennungsraum zwischen Zellenblock und Hülle verbrennen zu lassen. Unmittelbar nach dem Beginn der Verbrennung, die gezündet werden muss, entstehen grosse Temperaturgradienten, durch die die Zellen beschädigt werden können.

Es ist Aufgabe der Erfindung, eine Vorrichtung mit Brennstoffzellen zu schaffen, bei der das Anfahrverfahren ohne Schädigung der Zellen möglich ist. Diese Aufgabe lässt sich mit der in Anspruch 1 definierten Vorrichtung lösen.

Die Vorrichtung umfasst einen Zellenblock mit Brennstoffzellen, eine wärmedämmende Hülle und einen Nachverbrennungsraum zwischen Hülle und Zellenblock. Erfindungsgemäss ist der Nachverbrennungsraum an entgegengesetzten Enden über zwei Kanäle mit mindestens einem Abzug für Abgase verbunden. Diese Kanäle sind jeweils durch ein Absperrorgan verschliessbar, wobei der Verbrennungsraum eines Hilfsbrenners mit dem Kanal zwischen dem Nachverbrennungsraum und einem der Absperrorgane kommunizierend ist. Dieses Absperrorgan ist während der Anfahrphase geschlossen, während das andere geöffnet ist. Beim Übergang in den normalen Betriebszustand werden die Absperrorgane umgeschaltet, d.h. das offene wird geschlossen und das geschlossene geöffnet.

Während der Anfahrphase strömt das Abgas des Hilfsbrenners in den Nachverbrennungsraum und erhitzt dort den Zellenblock; gleichzeitig wird auch die Hülle der Vorrichtung aufgewärmt. Bevor das Abgas in den Nachverbrennungsraum geleitet wird, kann es durch einen Wärmetauscher geleitet werden, mit dem ein Prereformer aufheizbar ist.

Es werden schon mit oder kurz nach Beginn der Anfahrphase Luft und Gas in kleineren Mengen eingespeist (5 bis 10% im Vergleich zu dem stromliefernden Betriebszustand), um innerhalb der Brennstoffzellen die für den Betriebszustand richtige Luft- bzw. Gasverteilung herzustellen und aufrecht zu erhalten. Nach Durchströmen der Zellen treten die Luft und das Gas in den Nachverbrennungsraum aus. Sobald dort die Temperatur rund 700°C erreicht, kommt es zu einer selbstgezündeten Verbrennung des eingespeisten Gases.

Durch Steuern oder Regeln der zugeführten Luftmenge kann die Temperatur in der Hülle unter Kontrolle gehalten werden. Bei Erreichen der Betriebstemperatur werden die Massenströme der Luft und des Gases auf die für die Durchführung der elektrochemischen Reaktion optimalen Werte vergrössert.

Wenn nach Erreichen der Betriebstemperatur (900 °C) im Zellenblock die Absperrorgane umgeschaltet werden, gibt es im Verbrennungsraum eine Umkehr der Strömung. Die nachverbrannten Abgase der Brennstoffzellen gelangen nun in den Wärmetauscher des Prereformers, falls ein solcher vorhanden ist. Im Prereformer werden Erdgas und Wasser katalytisch und unter Wärmeaufnahme teilweise zu Wasserstoff, Kohlenmonoxid und Kohlendioxid umgesetzt. Nicht umgesetztes Erdgas wird anschliessend auf den Elektroden der Brennstoffzellen weiter reformiert.

Nach einer Wärmeabgabe an den Prereformer kann das immer noch heisse Abgas beispielsweise für die Erwärmung von Brauchwasser verwendet werden. Liegt für das Brauchwasser ein Bedarf an Wärme vor, der sich durch die zur Verfügung stehende Abwärme der elektrochemischen Reaktion nicht decken lässt, so kann zusätzlich Wärme mit dem Hilfsbrenner bereit gestellt werden. Dabei vermischt sich das Abgas des Hilfsbrenners mit dem Abgas der Brennstoffzellen und kann so, ohne zuvor durch den Nachverbrennungsraum treten zu müssen, einem für die Wassererwärmung vorgesehenen Wärmetauscher zugeführt werden. Dieser zusätzliche Wärmebedarf kann im Maximum einen Wert annehmen, der rund das Fünfache der durch die Zellen gelieferten Abwärme beträgt.

Die abhängigen Ansprüche 2 bis 7 beziehen sich auf vorteilhafte Ausführungsformen der erfindungsgemässen Vorrichtung. Die Ansprüche 2 und 3 betreffen insbesondere eine Vorrichtung, in der ein Prereformer integriert ist. Anspruch 6 betrifft eine Vorrichtung mit einem Wärmetauscher, der beispielsweise zum Erwärmen von Brauchwasser vorgesehen ist. Gegenstand der Ansprüche 8 bis 10 ist das Anfahrverfahren der erfindungsgemässen Vorrichtung. Anspruch 11 schliesslich bezieht sich auf das normale Betriebsverfahren.

Nachfolgend wird die Erfindung anhand der Zeichnungen näher erläutert. Es zeigen:
- Fig. 1: ein Blockschaltbild mit den wichtigsten Komponenten einer erfindungsgemässen Vorrichtung,
- Fig. 2: ein Blockschaltbild einer erfindungsgemässen Vorrichtung, die einen Prereformer enthält,
- Fig. 3: eine schematische Darstellung einer Anlage, die eine erfindungsgemässe Vorrichtung umfasst und
- Fig. 4: ein vorteilhaftes Ausführungsbeispiel der Erfindung.

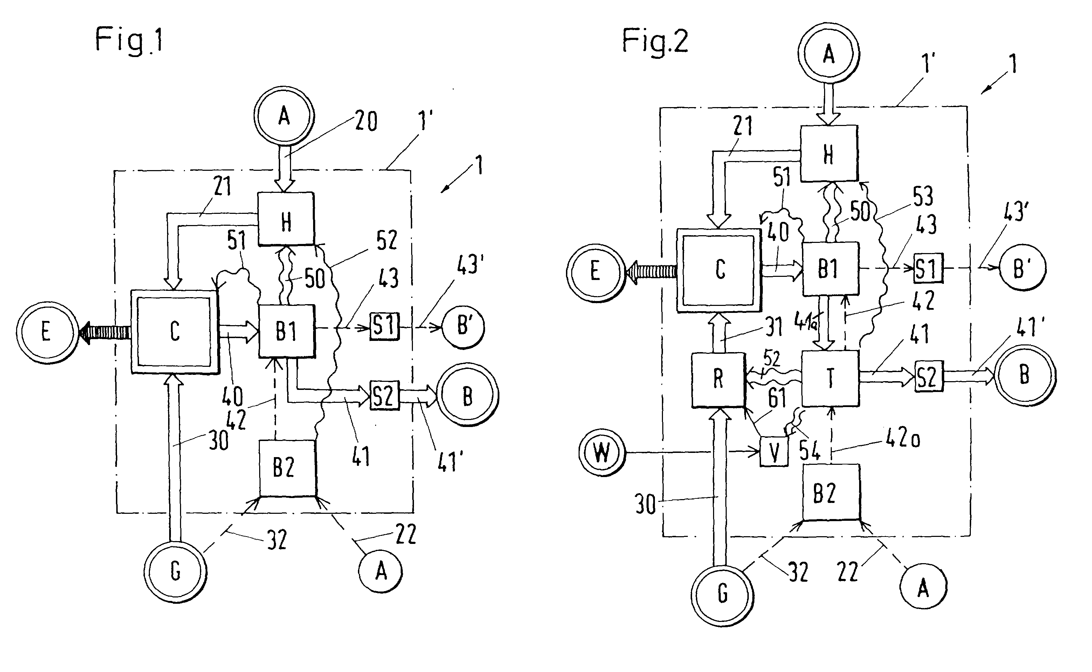

Die Blöcke der Fig.1, die innerhalb des strichpunktierten Rahmens 1' angeordnet sind, stellen die Komponenten einer erfindungsgemässen Vorrichtung 1 dar. Sie haben folgende Bedeutung: C = Zellenblock, in dem aus Gas G und Luft A elektrische Energie E erzeugt wird; H = Hülle, die ein als Vorerwärmer ausgebildetes Kanalsystem für die zugeführte Luft A enthält; B1 = Nachverbrennungsraum zwischen Zellenblock C und Hülle H; B2 = Hilfsbrenner, in dem ein Gemisch von Gas G und Luft A verbrannt wird; S1 = erster Ausgang oder Absperrorgan, durch das während der Anfahrphase Abgas B' die Vorrichtung 1 verlässt; S2 = zweiter Ausgang oder Absperrorgan, durch das während des stromliefernden Betriebszustands Abgas B in einen nicht dargestellten Abzug austritt.

Die Pfeile 20, 21, 30, 40, 41 und 41' geben den Transport von Luft, Gas bzw. Abgas während des stromliefernden Betriebszustands (S1 zu, S2 auf) an. Die aus dem Verbrennungsraum B1 in die Hülle fliessende Wärme, die für eine Vorerwärmung der Luft A genutzt wird, ist durch den Pfeil 50 dargestellt. Die Pfeile 22, 32, 42, 43, 43', 51 und 52 beziehen sich auf die Anfahrphase (S1 auf, S2 zu). Dabei ist der Pfeil 51 der Wärmestrom aus dem Abgas B' des Hilfsbrenners B2, das den Nachverbrennungsraum B1 durchströmt (Pfeile 42, 43). Wärme aus dem Hilfsbrenner B2, die zur Vorerwärmung der Luft A in der Hülle H genutzt wird, ist durch den Pfeil 52 dargestellt.

Das Blockschaltbild der Fig.2, das eine Erweiterung des ersten Blockschaltbildes ist, stellt eine Vorrichtung 1 mit einem Prereformer R dar. Während des Betriebszustandes strömt das Abgas B (Pfeil 41a) des Nachverbrennungsraums B1 durch einen Wärmetauscher T, durch den eine Wärmezufuhr (Pfeil 52) in den Prereformer R erfolgt. Gleichzeitig wird ein Verdampfer V beheizt (Pfeil 54), in dem Wasser W (Pfeil 60) verdampft wird. Mit dem Dampf (Pfeil 61) und Gas G (Pfeil 30) wird im Prereformer R unter Verwendung von Katalysatoren eine Dampfreformierung durchgeführt. Während der Anfahrphase wird der Prereformer R mittels Abgasen B' aus dem Hilfsbrenner B2 (Pfeil 42a) ebenfalls durch den Wärmetauscher T auf Betriebstemperatur aufgeheizt. Durch einen Wärmestrom aus T in H (Pfeil 53) wird die in die Vorrichtung 1 eingespeiste Luft A vorgewärmt.

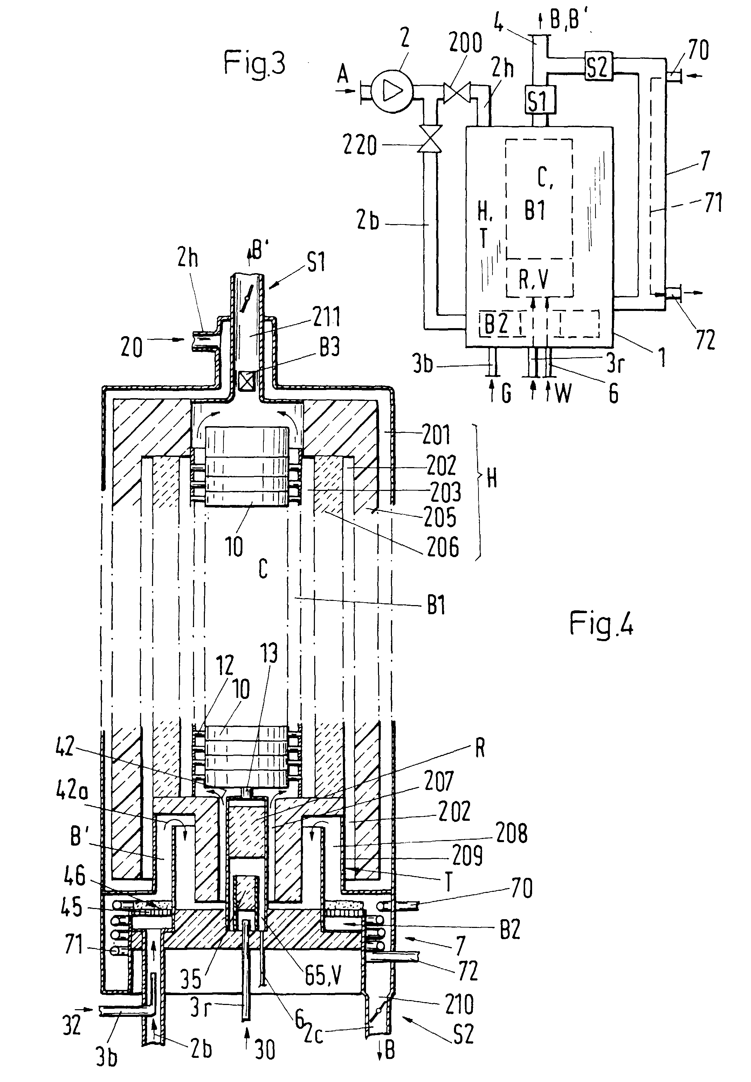

Fig.3 zeigt schematisch eine Anlage, die eine erfindungsgemässe Vorrichtung 1, ein Gebläse 2 für die Luft A, einen Abzug 4 für die Abgase B und B' sowie einen Wärmetauscher zur Entnahme von Wärme aus dem Abgasstrom umfasst. Luft A wird einerseits über ein Ventil 200 und eine Zuführleitung 2h in die Hülle H der Vorrichtung 1 eingespeist. Andererseits wird Luft A über ein Ventil 220 und eine Zuführleitung 2b in den Hilfsbrenner B2 eingespeist. (B2 ist ringförmig ausgebildet). Gas G wird über die Leitungen 3r und 3b in den Prereformer R bzw. in den Hilfsbrenner B2 zugeführt. Über eine Leitung 6 wird Wasser in den Verdampfer V eingespeist. Die Abgase B und/oder B' aus dem Nachverbrennungsraum B1 bzw. Hilfsbrenner B2 werden - bevor sie in den Abzug 4 gelangen - durch den Wärmetauscher 7 geleitet, mittels dessen beispielsweise Brauchwasser erwärmt wird (Anschlüsse 70, 72 und Wärmetauscherrohr 71).

Fig.4 zeigt ein vorteilhaftes Ausführungsbeispiel der erfindungsgemässen Vorrichtung 1, deren Zellenblock C aus einem Stapel von im wesentlichen zentralsymmetrischen Hochtemperatur-Brennstoffzellen 10 besteht (vgl. die eingangs zitierte EP-A 0654 838).

Die Absperrorgane S1 und S2 sind als Klappen ausgebildet. Sie sind in den Kanälen 211 und 210 angeordnet, die die Vorrichtung 1 mit einem nicht dargestellten Abgasabzug (Abzug 4 in Fig.3) verbinden.

Die Hülle H umfasst ein Kanalsystem mit Ringspalträumen 201, 202 sowie 203, einen luftundurchlässigen Körper 205 aus einem wärmedämmenden Material und einen luftdurchlässigen Körper 206, der einen gleichmässigen radialen Luftzustrom aus dem Raum 202 in den Raum 203 ermöglicht. Aus dem Raum 203 wird die Luft über Röhrchen 12 durch den Nachverbrennungsraum B1 in die Zellen 10 eingespeist.

Der untere Teil der Hülle H umfasst einen Prereformer R, einen Hilfsbrenner B2, einen Wärmetauscher T und einen Brauchwassererwärmer 7. Der Hilfsbrenner B2 ist ringförmig ausgebildet. Auf einer Platte 45 mit gleichmässig verteilten Durchlassöffnungen wird ein Gas/Luft-Gemisch (Zuführleitungen 3b, 2b) zur Verbrennung gebracht, wobei sich eine flächenartig ausgebreitete Flamme im Verbrennungsraum 46 ausbildet. Während des Anfahrbetriebs (S1 auf, S2 zu) wird mit den heissen Abgasen des Hilfsbrenners B2 (Pfeil 42a) im Abgaskanal 207 der Prereformer R geheizt. Über eine wärmeleitende Wand 209 zwischen dem Luftkanal 202 und einem Abgaskanal 208 des Hilfsbrenners B2 erfolgt eine Erwärmung der in der Hülle H fliessenden Luft.

Das für die stromliefernde Reaktion benötigte Gas G wird aus dem Prereformer R über eine Leitung 13 zentral in den Zellenstapel C eingespeist. Dem Prereformer R ist ein Schwefelabsorber 35 vorgeschaltet, mit dem schwefelhaltige Verunreinigungen des Erdgases entfernbar sind. Das Gas G (Pfeil 30) wird über die Leitung 3r in den Schwefelabsorber 35 eingespeist.

Ein ringspaltförmiger Mantelraum 65 um den Schwefelabsorber 35 ist als Verdampfer V für Wasser (Einspeiseleitung 6) ausgebildet. Durch die Verdampfung ergibt sich eine Abkühlung, dank der die Temperaturen im Schwefelabsorber 35 tiefere Werte als im Prereformer R annehmen und dadurch die Absorptionsprozesse erst möglich machen.

Nach dem Transport durch die stromliefernden Brennstoffzellen 10 befindet sich im Gas G immer noch ein brennbarer Rest, der im Nachverbrennungsraum B1 verbrannt wird. Während der Anfahrphase findet - solange eine Selbstzündung ausbleibt - im Raum B1 keine Verbrennung statt. Um zu verhindern, dass durch den geöffneten Ausgang S1 unverbrannte Stoffe austreten, kann ein Abfacklungsbrenner B3 vor dem Ausgang S1 eingerichtet werden. Dieser Brenner B3 muss gezündet werden, beispielsweise mit einem Glühdraht.

Die Vorrichtung 1 der Fig.4 ist besonders für die Haustechnik geeignet. Einerseits lässt sich eine konstante elektrische Leistung abgeben. Andererseits kann dank des Hilfsbrenners B2 eine in einem weiten Bereich liegende Leistung an Wärmeenergie zur Verfügung gestellt werden. Dank der erfindungsgemässen Verfahrensweise bleibt die Temperatur des Zellenstapels von der variablen Wärmeleistung unbeeinflusst.

## Patentansprüche

1. Vorrichtung mit Brennstoffzellen (10), die einen Zellenblock (C), eine wärmedämmende Hülle (H), einen Nachverbrennungsraum (B1) zwischen Hülle und Zellenblock sowie einen Hilfsbrenner (B2) umfasst, dadurch gekennzeichnet,
dass der Nachverbrennungsraum an entgegengesetzten Enden über zwei Kanäle (210, 211) mit mindestens einem Abzug (4) für Abgase (B', B) verbunden ist, dass diese Kanäle jeweils durch ein erstes bzw. zweites Absperrorgan (S1, S2) verschliessbar sind und dass ein Verbrennungsraum (46) des Hilfsbrenners mit dem Kanal (210) zwischen Nachverbrennungsraum und zweitem Absperrorgan kommunizierend ist, wobei während einer Anfahrphase das zweite Absperrorgan geschlossen und das erste geöffnet ist.

2. Vorrichtung nach Anspruch 1, dadurch gekennzeichnet, dass ein Prereformer (R) für die Aufbereitung eines Gases (G) in der Hülle (H) angeordnet ist und dass der Prereformer mit einem Wärmetauscher (T) verbunden ist, der einen Kanal (207) für die Erwärmung durch Abgas des Hilfsbrenners bzw. des Zellenblocks umfasst.

3. Vorrichtung nach Anspruch 2, dadurch gekennzeichnet, dass ein Verdampfer (V) für Wasser (W) über eine wärmeübertragende Wand mit dem Abgaskanal (207) verbunden ist.

4. Vorrichtung nach Anspruch 2 oder 3, dadurch gekennzeichnet, dass dem Prereformer (R) ein Schwefelabsorber (35) vorgeschaltet ist.

5. Vorrichtung nach einem der Ansprüche 1 bis 3, dadurch gekennzeichnet, dass in der Hülle (H) ein Kanalsystem (201, 202, 203) für eine Luftvorerwärmung integriert ist und dass wärmeübertragende Wände (209) zwischen diesem Kanalsystem und einem Abgaskanal (208) des Hilfsbrenners (B2) angeordnet sind.

6. Vorrichtung nach einem der Ansprüche 1 bis 5, dadurch gekennzeichnet, dass vor dem zweiten Ausgang (S2) ein Wärmetauscher (7) zur Entnahme von Wärme aus dem Abgasstrom vorgesehen ist.

7. Vorrichtung nach einem der Ansprüche 1 bis 6, dadurch gekennzeichnet, dass der Zellenblock (C) aus einem Stapel von im wesentlichen zentralsymmetrischen Hochtemperaturzellen (10) besteht.

8. Verfahren zum Anfahren einer Vorrichtung gemäss einem der Ansprüche 1 bis 7, dadurch gekennzeichnet, dass zuerst das zweite Absperrorgan (S2) geschlossen wird während das erste (S1) offen bleibt, der Hilfsbrenner (B2) in Betrieb genommen wird und mit den Abgasen der Zellenblock (C) über den Nachverbrennungsraum (B2) aufgeheizt wird, bis die für den Betrieb der Brennstoffzellen (10) nötige Temperatur erreicht ist, anschliessend das zweite Absperrorgan geöffnet, das erste Absperrorgan geschlossen sowie der Hilfsbrenner ausgeschaltet werden und ferner die Massenströme der Reaktionsstoffe auf die für den stationären Betrieb der Zellen optimalen Werte erhöht werden.

9. Verfahren nach Anspruch 8, dadurch gekennzeichnet, dass die Reaktionsstoffe mit Massenströmen eingespeist werden, die rund 5 bis 10% der Werte aufweisen, die für den stationären Betrieb der Zellen vorgesehen sind.

10. Verfahren nach Anspruch 9, dadurch gekennzeichnet, dass beim ersten Absperrorgan eine Nachverbrennung durchgeführt wird.

11. Verfahren zum Betreiben einer Vorrichtung gemäss einem der Ansprüche 1 bis 7, dadurch gekennzeichnet, dass ein zusätzlicher, durch das Abgas zu deckender Wärmebedarf mittels des Hilfsbrenners geliefert wird, wobei dieser zusätzliche Wärmebedarf im Maximum einem Wert annehmen kann, der rund das Fünfache der durch die Zellen gelieferte Abwärme beträgt.

## Claims

1. Apparatus with fuel cells (10) comprising a cell block (C), a heat insulating sleeve (H), an afterburner chamber (B1) between the sleeve and the cell block as well as an auxiliary burner (B2)
characterised in that
the afterburner chamber is connected at its opposite ends via two channels (210, 211) to at least one exhaust duct (4) for exhaust gases (B', B); in that these channels are each closeable by a first or second blocking member (S1, S2) respectively; and in that a combustion chamber (46) of the auxiliary burner communicates with the channel (210) between the afterburner chamber and the second blocking member, with the second blocking member being closed and the first open during a starting-up phase.

2. Apparatus in accordance with claim 1 characterised in that a prereformer (R) is provided in the sleeve (H) for the processing of a gas (G); and in that the prereformer is connected to a heat exchanger (T) which comprises a channel (207) for the heating of the auxiliary burner or cell block respectively by exhaust gas.

3. Apparatus in accordance with claim 2 characterised in that a vaporiser (V) for water (W) is connected to an exhaust gas channel (207) via a heat transferring wall.

4. Apparatus in accordance with claim 2 or 3 characterised in that a sulphur absorber (35) is placed ahead of the prereformer (R).

5. Apparatus in accordance with one of the claims 1 to 3, characterised in that a channel system (201, 202, 203) for the preheating of air is integrated into the sleeve (H); and in that heat transferring walls (209) are placed between this channel system and an exhaust gas channel (208) of the auxiliary burner (B2).

6. Apparatus in accordance with one of the claims 1 to 5, characterised in that a heat exchanger (7) is provided before the second outlet (S2) for the removal of heat from the exhaust gas flow.

7. Apparatus in accordance with one of the claims 1 to 6, characterised in that the cell block (C) consists of a stack of substantially centrally symmetric high temperature cells (10).

8. Method for starting up an apparatus in accordance with one of the claims 1 to 7, characterised in that the second blocking member (S2) is first closed while the first (S1) remains open, the auxiliary burner (B2) is taken into operation and heated up by the exhaust gases of the cell block (C) via the afterburner chamber (B2) until the required temperature for operation of the fuel cells (10) is attained, subsequently the second blocking member is opened, the first blocking member closed and the auxiliary burner is switched off, and further the mass flows of the reaction materials are raised to the optimum values for the stationary operation of the cells.

9. Method in accordance with claim 8 characterised in that the reaction materials are fed in with mass flows having 5 to 10% of the values which are provided for the stationary operation of the cells.

10. Method in accordance with claim 9 characterised in that afterburning is carried out at the first blocking member.

11. Method for operating an apparatus in accordance with one of the claims 1 to 7 characterised in that an additional heating requirement to be covered by the exhaust gas is supplied by means of the auxiliary burner, with this additional heating requirement being capable of adopting maximum values amounting to about five times the heat delivered by the cells.

## Revendications

1. Dispositif avec des cellules électrochimiques (10), qui comprend un bloc de cellules (C), une enveloppe calorifuge (H), une enceinte de postcombustion (B1) entre l'enveloppe et le bloc de cellules ainsi qu'un brûleur auxiliaire (B2), caractérisé en ce que l'enceinte de postcombustion est reliée aux extrémités opposées par deux canaux (210, 211) à au moins un évent (4) pour des gaz d'échappement (B', B), en ce que ces canaux peuvent être fermés chacun par un premier respectivement deuxième organe de blocage (S1, S2) et en ce qu'une enceinte de combustion (46) du brûleur auxiliaire communique avec le canal (210) entre l'enceinte de postcombustion et le deuxième organe de blocage, où pendant une phase de démarrage, le deuxième organe de blocage est fermé et le premier est ouvert.

2. Dispositif selon la revendication 1, caractérisé en ce qu'un pré-reformeur (R) est disposé pour la préparation d'un gaz (S) dans l'enveloppe (H) et en ce que le pré-reformeur est relié à un échangeur de chaleur (T) qui entoure un canal (207) pour l'échauffement par le gaz d'échappement du brûleur auxiliaire respectivement du bloc de cellules.

3. Dispositif selon la revendication 2, caractérisé en ce qu'un évaporateur (V) pour l'eau (W) est relié par une paroi transmettant la chaleur au canal de gaz d'échappement (207).

4. Dispositif selon la revendication 2 ou 3, caractérisé en ce qu'il est disposé en amont du pré-reformeur (R) un absorbeur de souffre (35).

5. Dispositif selon l'une des revendications 1 à 3, caractérisé en ce qu'il est intégré dans l'enveloppe (H) un système de canaux (201, 202, 203) pour un préchauffement de l'air, et que des parois transmettant la chaleur (209) sont disposées entre ce système de canaux et un canal de gaz d'échappement (208) du brûleur auxiliaire (B2).

6. Dispositif selon l'une des revendications 1 à 5, caractérisé en ce qu'il est prévu devant la deuxième sortie (S2) un échangeur de chaleur (7) pour prélever de la chaleur du flux de gaz d'échappement.

7. Dispositif selon l'une des revendications 1 à 6, caractérisé en ce que le bloc de cellules (C) est constitué d'une pile de cellules de température élevée (10) sensiblement symétriques au centre.

8. Procédé de démarrage d'un dispositif selon l'une des revendications 1 à 7, caractérisé en ce que d'abord le deuxième organe de blocage (S2) est fermé pendant que le premier (S1) reste ouvert, que le brûleur auxiliaire (B2) est mis à fonctionner et que, avec les gaz d'échappement, le bloc de cellules (B) est chauffé par l'enceinte de postcombustion (B2) jusqu'à ce que la température requise pour le fonctionnement des cellules électrochimiques (10) soit atteinte, qu'ensuite le deuxième organe de blocage est ouvert, le premier organe de blocage est fermé et le brûleur auxiliaire est mis hors service et, en outre, les flux massiques des matières de réaction sont augmentés aux valeurs optimales pour le fonctionnement stationnaire des cellules.

9. Procédé selon la revendication 8, caractérisé en ce que les matières de réaction sont alimentées en flux massiques qui présentent environ 5 à 10 % des valeurs prévues pour le fonctionnement stationnaire des cellules.

10. Procédé selon la revendication 9, caractérisé en ce qu'on exécute au premier organe de blocage une postcombustion.

11. Procédé de fonctionnement d'un dispositif selon l'une des revendications 1 à 7, caractérisé en ce qu'une chaleur nécessaire additionnelle, à couvrir par le gaz d'échappement, est fournie au moyen du brûleur auxiliaire, cette chaleur nécessaire additionnelle pouvant prendre au maximum une valeur qui représente environ le quintuple de la chaleur perdue fournie par les cellules.
